# EUROPEAN PATENT APPLICATION

(11) **EP 4 435 731 A1**
(43) Date of publication of application: **25.09.2024**
(21) Application number: 23163331.4
(22) Date of filing: 22.03.2023
(51) Int. Cl.: G06T 19/00, G06F 3/01

(54) **AN APPARATUS, METHOD AND COMPUTER PROGRAM FOR CONTROLLING THE DISPLAY OF CONTENT**

(71) Applicant: Nokia Technologies Oy, 02610 Espoo (FI)
(72) Inventor: LAAKSONEN, Lasse Juhani, Tampere (FI); VILERMO, Miikka Tapani, Siuro (FI); LEHTINIEMI, Arto Juhani, Lempäälä (FI)
(74) Representative: Nokia EPO representatives

(57) **Abstract**

Examples of the disclosure relate to coordinating the display of content in a head mounted item with the content displayed on a display. In examples of the disclosure device content being displayed on a display of a device is identified and a position of a head mounted item relative to the display of the device is determined. The head mounted item is controlled to display additional content corresponding to the device content displayed on the display of the device such that the additional content displayed by the head mounted item provides additional content to the device content displayed on the display of the device and the additional content is aligned with the device content displayed on the display of the device. The alignment is based on the determined position of the head mounted item relative to the display of the device.

## Description

### TECHNOLOGICAL FIELD

Examples of the disclosure relate to an apparatus, method and computer program for controlling the display of content. Some relate to an apparatus, method and computer program for coordinating the display of content in a head mounted item with the content displayed on a display.

### BACKGROUND

Head mounted items, such as headsets or smart glasses, can be used by a user to view content such as augmented reality (AR) and extended reality (XR). A user of a head mounted item could also look at other devices that have a display such as a smart phone or tablet device.

### BRIEF SUMMARY

According to various, but not necessarily all, examples of the disclosure there may be provided an apparatus comprising means for:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device, wherein the alignment is based on the determined position of the head mounted item relative to the display of the device.

The additional content displayed by the head mounted item may provide additional content to the device content displayed on the display of the device by at least one of:
displaying part of the device content that is not displayed on the display of the device;
extending the device content that is displayed on the display of the device; or
creating a perception of depth in an image displayed on the display of the device.

The means may also be for controlling a depth of rendering of additional content displayed by the head mounted item based, at least in part on, the device content displayed on the display of the device and the position of the head mounted item relative to the display.

The means may also be for controlling the additional content displayed by the head mounted item so that it appears to have a lower resolution compared to the device content displayed on the display of the device.

The means may also be for controlling the additional content displayed by the head mounted item so that it appears to be displayed outside an area of the display of the device.

The additional content that is displayed so that it appears to be outside the area of the display of the device may comprise at least one of:
an indication of device content not displayed on the display of the device;
an indication of a size of an image wherein at least part of the image is displayed on the display of the device; or
one or more parts of an image wherein a first part of an image is displayed on the display of the device.

The means may also be for controlling the additional content displayed by the head mounted item so that it appears to be displayed at least partly overlapping an area of the display of the device.

The means may be for separating content into two or more segments wherein at least a first segment comprises device content displayed on the display of the device and at least a second segment comprises additional content displayed by the head mounted item.

The second segment may be displayed at a lower resolution to the first segment.

The device content may be displayed on the display of the device is identified using image recognition of the device content.

The head mounted item may comprise at least one of;
an augmented reality headset; or
smart glasses.

According to various, but not necessarily all, examples of the disclosure there may be provided a method comprising:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device wherein the alignment is based on the determined position of the head mounted item relative to the display of the device.

According to various, but not necessarily all, examples of the disclosure there may be provided a computer program comprising program instruction which, when executed by an apparatus, cause the apparatus to perform:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device wherein the alignment is based on the determined position of the head mounted item relative to the display of the device.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIGS. 1A and 1B show a user viewing content;
FIG. 2 shows a user viewing content;
FIG. 3 shows an example method;
FIGS. 4A to 4C show example content;
FIGS. 5A to 5C show example content;
FIGS. 6A to 6B show example content; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Examples of the disclosure relate to controlling the display of content by a head mounted item so that the content displayed by the head mounted item augments the content displayed on the display of a different device.

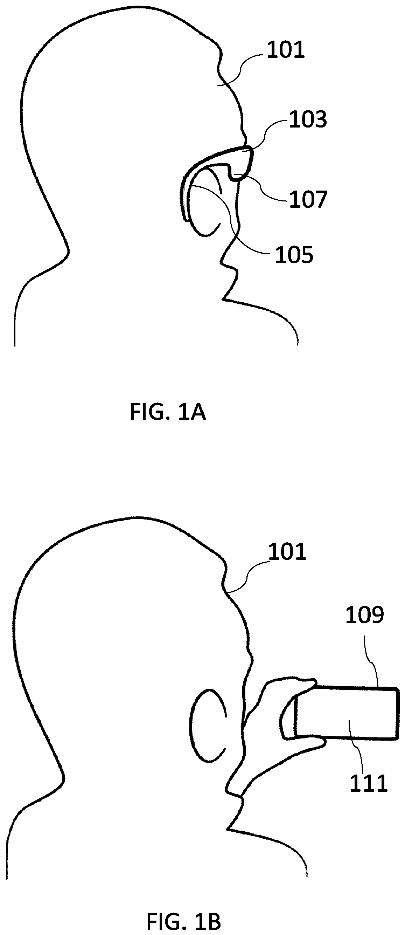

Figs. 1A and 1B show a user 101 viewing content using different types of devices. In Fig. 1A the user 101 is viewing content using a head mounted item 103.

The head mounted item 103 can be configured to display mediated reality content to a user 101 wearing the head mounted item 103. The mediated reality content can be virtual reality (VR) content, augmented reality (AR) content, extended reality (XR) content and/or any other suitable type of content or combinations of content.

The head mounted item 103 can be configured to be worn by the user 101. The head mounted item 103 can comprise a mounting portion 105. The mounting portion 105 can enable the head mounted item 103 to be mounted on the head or face of the user 101. When the head mounted item 103 is mounted on the head or face of the user 101, the user's head or face supports the weight, or at least a portion of the weight, of the head mounted item 103.

In the example of Fig. 1A the head mounted item 103 comprises a pair of smart glasses. In this case the mounting portion 105 comprises ear pieces which rest on the ears of the user. Other types of head mounted item 103, such as, augmented reality headsets or helmets, could be used in other examples of the disclosure. These could have different types of mounting portions 105.

In the example of Fig. 1A the head mounted item 103 also comprises a near eye display 107. The head mounted item 103 can comprise more than one near eye display 107. The near eye display 107 is positioned in the head mounted item 103 so that when the head mounted item 103 is worn by the user 101 the near eye display 107 is positioned in front of the eyes of the user 101. The near eye display 107 can be used to display content to the user 101.

The near eye display 107 can be configured to provide stereoscopic images to the user 101. This can enable different parts of the content displayed by the head mounted item 103 to appear to be at different depths for the user 101.

The head mounted item 103 can also comprise components that are not shown in Fig. 1A. For example, the head mounted item 103 could comprise means for detecting the user's head position. The means could comprise position sensors such as an inertial measurement unit (IMU) or any other suitable type of sensors.

In some examples the head mounted item 103 could comprise eye tracking means. The eye tracking means could comprise sensors such as image sensors that can be used to track the pupils of the user 101. The eye tracking means can be used to determine a direction that the user 101 is looking in.

In some examples the head mounted item 103 can comprise means for determining the distance between the user's eye and the head mounted item 103. This information can be used to render images so as to create a perception of depth.

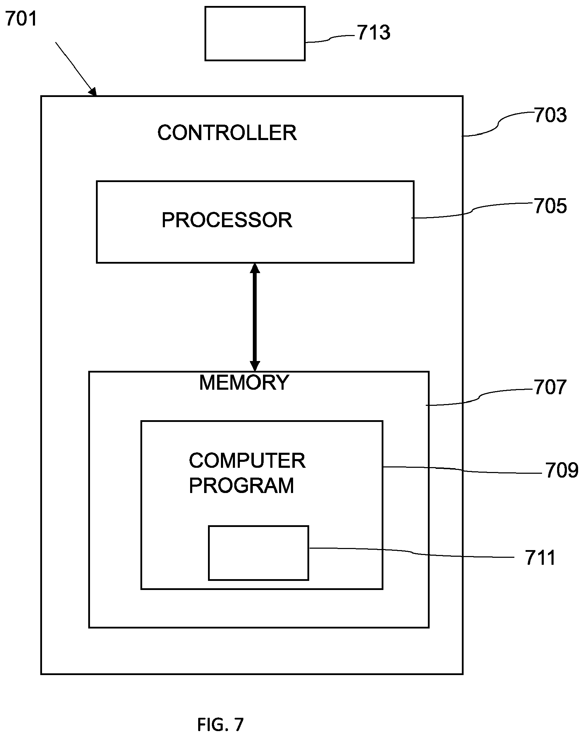

The head mounted item 103 can also comprise an apparatus or other means for controlling the head mounted item 103. The apparatus could be configured to control the content that is displayed by the head mounted item 103. An example apparatus is shown in Fig. 7 and described below.

In Fig. 1B the user 101 is viewing content using a device 109 comprising a display 111. The device 109 in this case is a hand-held electronic device 109. The device 109 could be a smart phone or any other suitable type of device.

The display 111 can be configured to display content. When the user 101 is viewing content on the display 111 the devices 109 is positioned in the view of the user 101. In the example of Fig. 1B the user 101 is holding the device 109 in their hand and looking at the display 111.

The size of the display 111 is limited so that content that is displayed might need to be cropped. This means that the user 101 viewing content on the display 111 might not be able to view all of the content at the same time.

In some examples the head mounted item 103 could comprise a camera that can be configured to detect the relative position of the head mounted item 103 and the display 111 of the device 109.

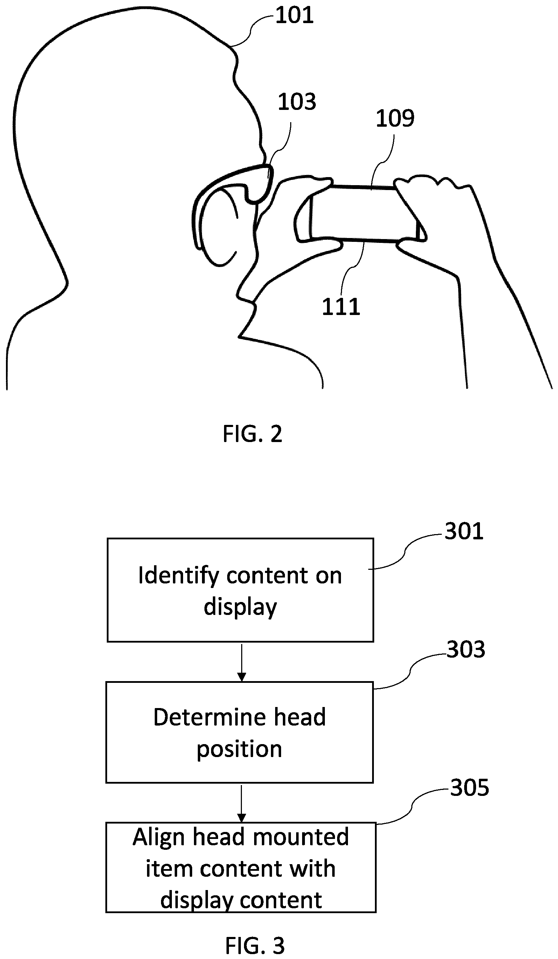

Fig. 2 shows a user viewing content displayed by both a head mounted item 103 and a device 109 with a display 111. The content that is being displayed can comprise images, photos, videos or any other suitable type of content.

In this example the user 101 is wearing the head mounted item 103 and holding the device 109 in their hand so that it is positioned within their view. The user 101 can be viewing content that is displayed by the head mounted item 103 and also content that is displayed on the display 111 of the device 109.

The content that is displayed on the display 111 of the device 109 is constrained by the size of the display 111. Also, all of the content that is displayed on the display 111 of the device 109 is displayed in the same plane.

The content that is displayed by the head mounted item 103 is not constrained by the size of a display 111 and can also be displayed in different planes. However, image quality properties, such as resolution and dynamic range, might not be as high for the content displayed by the head mounted item 103 compared to the content displayed by the display 111.

In examples of the disclosure the display of content by the head mounted item 103 and the display 111 of the device 109 is coordinated so that the content displayed by the head mounted item 103 augments the content displayed on the display 111. The coordination of the display of the content can also address some of the limitations of the content displayed by the head mounted item 103 and the device 109.

Fig. 3 shows an example method that can be used in examples of the disclosure. The method could be implemented by an apparatus or other controller within a head mounted item 103 or in any other suitable device. The method can enable control of a head mounted item 103 and/or a device 109 as shown in Fig. 2 or any other suitable types of devices.

The method comprises, at block 301, identifying device content being displayed on a display 111 of a device 109. The device content is content that is displayed on the display 111 of the device 109. The device 109 could be any suitable device with a display 111. In some examples the device 109 could be a handheld device such as a smart phone. Other types of devices that are not handheld, or intended to be used as handheld devices, could be used in other examples.

Any suitable means can be used to identify the device content on the display 111. In some examples the device content can be identified through the use of image recognition or other similar processes. In some examples a camera in the head mounted item 103 can be used to enable device content displayed on the display 111 to be identified.

In some examples the device content can be identified, at least in part, based on the exchange of information between the device 109 and the head mounted item 103. For instance, a file comprising the same content could be accessed by both the head mounted item 103 and the device 109 with the display 111. An indication of the content and/or the file can be shared between the device 109 and the head mounted item 103 so that the same content is accessed by both the device 109 and the head mounted item 103.

At block 303 the method comprises determining the head position of the user 101 of the head mounted item 103. The head position is determined relative to the display 111 of the device 109. The head position can be determined by determining the position of the head mounted item 103 relative to the display 111.

The head position relative to the display 111 can comprise an orientation of the user's head relative to the display 111 and/or a distance between the user's head and the display 111.

Any suitable means can be used to determine the user's head position. For instance the head mounted item 103 could comprise sensors such as an inertial measurement unit that can be configured to determine the position of the user's head. Other types of sensors such as cameras could be used in respective examples.

At block 305 the method comprises controlling the head mounted item 103 to display additional content corresponding to the device content displayed on the display 111 of the device 109. In some examples the additional content can be corresponding in that it can be generated from the same data file. For example, both the head mounted item 103 and the device 109 could be configured to access the same data file and render content based on the same data file. The additional content could comprise the same images or videos, or different parts of the same images or videos.

The additional content displayed by the head mounted item 103 can be displayed so that it provides additional content to the device content displayed on the display 111 of the device 109. The additional content displayed by the head mounted item 103 can provide additional content to the device content displayed on the display 111 of the device 109 by displaying part of the device content that is not displayed on the display 111 of the device 109, by extending the device content that is displayed on the display 111 of the device 109, by creating a perception of depth in an image, or other device content, displayed on the display 111 of the device 109.

In some examples the additional content can provide information that is not provided in the device content displayed on the display 111. The information provided by the additional content could be a part of the image or other type of content that is not displayed on the display 111. In some examples the information provided by the additional content could be an indication that there are further parts to the image or other content that is not currently displayed on the display 111. For instance, it could comprise an indication that part of an image is not shown, an indication of the total size of the image, or any other suitable information.

The additional content displayed by the head mounted item 103 is displayed so that it is aligned with the device content displayed on the display 111 of the device 109. The alignment is based on the determined position of the head mounted item relative to the display of the device. The alignment can enable the additional content displayed by the head mounted item 103 to be displayed so that it appears to be adjacent to, or to the side of, device content that is displayed on the display 111. In some examples, at least part of, the additional content displayed by the head mounted item 103 can be displayed so that it overlaps some of the device content displayed on the display 111. In some examples the alignment enables parts of the device content displayed by the display 111 to appear to be continuous with parts of the additional content displayed by the head mounted item 103.

The alignment of the additional content displayed by the head mounted item 103 can be achieved using any suitable means and processes. For instance, in some examples the alignment could be achieved using eye tracking to ensure that the additional content displayed by the head mounted item 103 is displayed so that it appears to be aligned with the device content displayed on the display 111 for the user 101.

In some examples of the disclosure the device content displayed on the display 111 is still visible to the user when the additional content is displayed by the head mounted item 103. In such cases the additional content displayed by the head mounted item 103 is displayed so that it does not completely cover or blocks the device content displayed on the display 111.

In some examples of the disclosure the depth of rendering of additional content displayed by the head mounted item 103 can be controlled based, at least in part on, the device content displayed on the display 111 of the device 109 and the position of the display 111 relative to the head mounted item 103. The controlling the depth of the rendering can comprise controlling the size and position of items within the additional content so that it appears to be at a particular distance from the user 101 and/or the display 111. The controlling of the depth rendering can help with the alignments of the respective content. The controlling of the depth rendering can help to augment the device content displayed on the display 111 by enabling some additional content to appear to be displayed in a different plane.

In some examples the additional content displayed by the head mounted item 103 can be displayed so that it appears to have one or more properties that are of a lower quality compared to the quality of the device content displayed on the display 111. The difference in the resolution could be intentional or could be a consequence of the head mounted item 103 having a lower resolution than the display 111. For instance, the additional content displayed by the head mounted item 103 can be displayed so that it appears to have a lower resolution compared to the device content displayed on the display 111 of the device 109. In some examples the lower resolution of the additional content displayed by the head mounted item 103 can be used to provide a blurriness that helps to provide depth perception, that is, it helps to generate the appearance that different parts of the respective content are in different planes.

In some examples the additional content displayed by the head mounted item 103 can be displayed so that it appears to be displayed outside an area of the display 111 of the device 109. The additional content that is displayed so that it appears to be outside the area of the display 111 of the device 109 can comprise, an indication of device content not displayed on the display 111 of the device 109, an indication of a size of an image wherein at least part of the image is displayed on the display 111 of the device 109, one or more parts of an image wherein a first part of an image is displayed on the display 111 of the device 109 and/or any other suitable additional content.

In some examples the additional content displayed by the head mounted item 103 can be displayed so that it appears to be displayed overlapping an area of the display 111 of the device 109. The additional content displayed by the head mounted item 103 can be displayed so that it appears to be displayed overlapping a first area of the display 111 of the device 109 but does not overlap a second area of the display 111 of the device 109.

In some examples the content that is displayed by the respective devices can be separated into two or more segments. At least a first segment can comprise device content displayed on the display 111 of the device 109 and at least a second segment can comprise additional content displayed by the head mounted item 103. The different segments can comprise different content. The segment that is displayed by the head mounted item 103 can comprise additional content that is not the main subject and/or is not in the focus plane of the device content displayed on the display 111 of the device 109. The respective segments can be displayed so that they are aligned with each other.

The different segments can be displayed with different properties. For example, the second segment, that is displayed by the head mounted item 103, can be displayed at a lower resolution to the first segment that is displayed on the display 111.

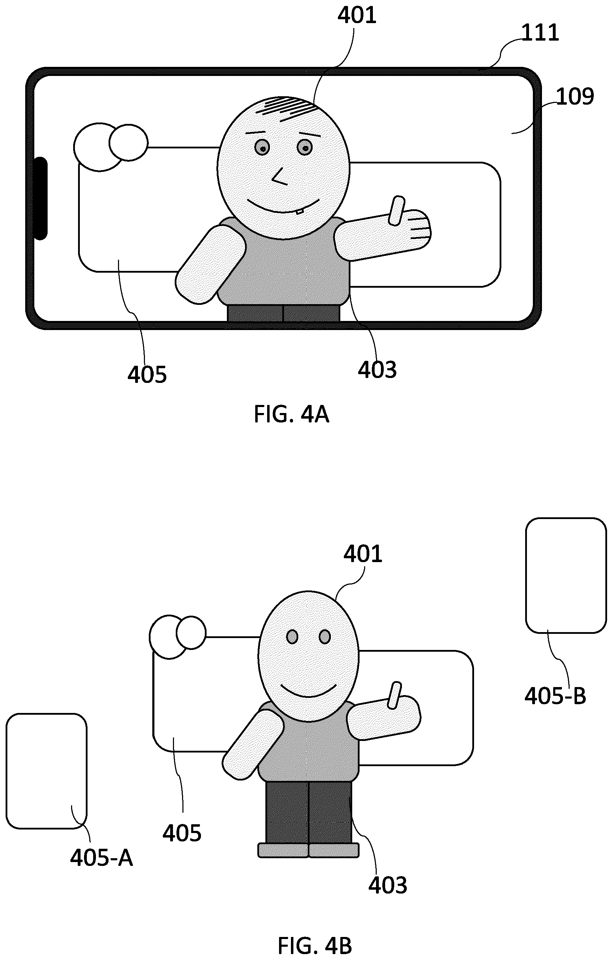

Examples of content that can be displayed by the display 111 and the head mounted item 103 are shown in Fig. 4A to 7B.

Figs. 4A to 4C show a first example of content that can be displayed by the device 109 and the head mounted item 103 respectively.

Fig. 4A shows content 401 being displayed on the display 111 of a device 109. The device 109 could be a handheld device 109 such as a smart phone or any other suitable type of device 109.

In this example the content 401 comprises an image. The image could be a photo or video or any other type of image. In this example the content comprises a main subject 403 and a background 405. The main subject 403 in this case is a person. The main subject 403 can be displayed on the display 111 so that it is sharp and detailed. The background 405 can be displayed so that it is blurred with round specular highlights. This can create a bokeh effect.

In this example only part of the image is displayed on the display 111. Only part of the main subject 403 fits onto the display 111. In this case the top half of the person is displayed but the lower half is not.

In some cases, it might be possible to zoom out of the content 401 so that the main subject 403 is displayed at a smaller scale so that it fits onto the display 111. However, this would decrease the resolution of the main subject 403 and make the details harder for the user 101 to see.

The content401 that is displayed on the display 111 does not have any depth resolution. That is, the main subject 403 and the background 405 are displayed so that they appear to be in the same plane.

Fig. 4B shows the same content 401 displayed using a head mounted item 103. This shows the same image that is displayed by the display 111 in Fig. 4A.

The head mounted item 103 is not constrained by a display size. Therefore in Fig. 4B more of the image can be displayed by the head mounted item 103 than can be displayed by the display 111. In Fig. 4B all of the main subject 403 is displayed by the head mounted item. In this case both the top half of the person and the lower half of the person are displayed. All of the main subject 403 can be displayed without decreasing the size of the main subject 403 as it appears to the user 101.

The content displayed by the head mounted item 103 also comprises parts of the background 405-A and 405-B that are not displayed on the display 111. These can comprise parts of an image that have been cropped from the image displayed on the display 111.

The different parts of the image can also be displayed by the head mounted item 103 so as to create a perception of depth. For instance, the background 405 405.A, 405-B or parts of the background 405 405.A, 405-B can be displayed so that it appears to be in a different plane to the main subject 403.

However, the content displayed by the head mounted item 103 has lower image properties than the content displayed on the display 111. In the example of Fig. 4B the main subject 403 does not appear as sharp or detailed compared to the main subject 403 displayed on the display 111. In this case facial details such as eyebrows and nose and pupils are visible in the image on the display 111 but not in the image from the head mounted item 103.

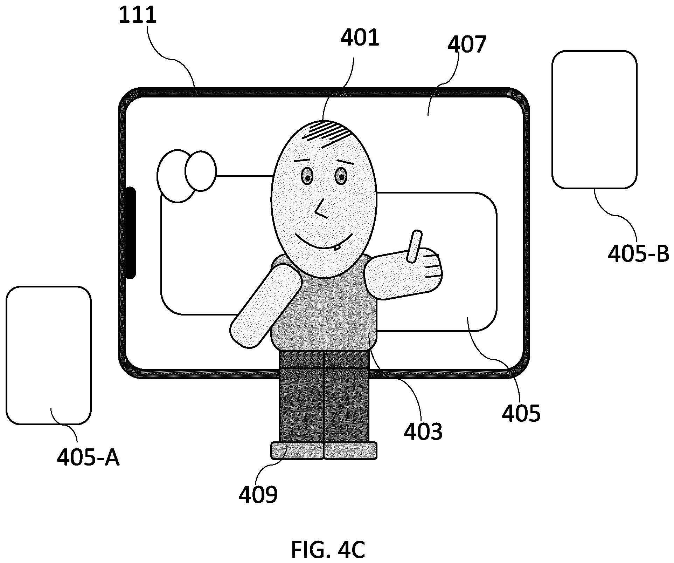

Fig. 4C shows the same content 401 displayed using both a head mounted item 103 and display 111 in accordance with examples of the disclosure. The method of Fig. 3, or any other suitable method, can be used to control the display of the content 401.

In Fig. 4C the content 401 that is displayed is the same image that is displayed by just the display 111 in Fig. 4A and by just the head mounted item in Fig. 4B.

A first part 407 of the content 401 is displayed on the display 111. The first part 407 of the content can comprise device content because it is displayed on the display 111. The edge of the display 111 is indicated in Fig. 4C. In this example the first part 407 of the content 401 comprises part of the main subject 403 and part of the background 405. The first part 407 of the content 401 does not comprise at least some parts of the image. In this case the lower half of the person and some parts of the background 405-A, 405-B are not displayed on the display 111.

The first part 407 of the content 401 that is displayed on the display 111 can be displayed at high resolution. The details of the parts of the main subject 403 that are displayed can be clearly seen in the first part 407 of the content 401 that is displayed on the display 111.

A second part 409 of the content 401 is also displayed by the head mounted item 103. The second part 409 of the content 401 can comprise additional content. The second part 409 of the content 401 displayed by the head mounted item 103 comprises content that is not currently displayed by the display 111. In this case the second part 409 of the content 401 comprises parts of the image that are not currently displayed by the display 111.

In this particular example the upper half of the person is displayed by the display 111 and so is not displayed by the head mounted item 103. Therefore, the upper half of the person is in the first part 407 of the content 401 but not in the second part 409 of the content 401. Conversely the lower half of the person is not displayed by the display 111 and so this is displayed by the head mounted item 103. Therefore, the lower half of the person is not in the first part 407 of the content 401 but is in the second part 409 of the content 401.

The first part 407 of the content 401 that is displayed by the display 111 can be identified through image recognition and/or from information received from the device 109 comprising the displayed and/or by using any other suitable means.

The second part 409 of the content 401 that is displayed by the head mounted item 103 is displayed so that it is aligned with the content displayed on the display 111. In this example the lower half of the person is displayed by the head mounted item 103 at a position and sized so that it appears to be continuous with the upper half of the person displayed by the display 111. The parts of the background 405-A and 405-B that are not displayed on the display 111 are displayed by the head mounted item 103 so that they are sized and shaped so as to appear to be part of the background 405 displayed by the display 111.

The second part 409 of the content 401 that is displayed by the head mounted item 103 can be displayed so as to generate a perception of depth. For instance, the parts of the background 405-A and 405-B that are not displayed on the display 111 can be displayed by the head mounted item 103 so that they appear to be in a different plane to the background 405 and main subject 403 displayed on the display 111. The position, and size of these parts of the background 405-A and 405-B can be selected so as to generate the perception of depth.

Therefore, coordinating the display of the content 401 displayed by the display 111 and the head mounted item 103 the user 101 can enable improvements in the overall presentation of the content 401 for the user 101. In the example of Fig. 4C the user 101 can view all of the content 401 because this is displayed by the head mounted item 103 and can also perceive depth within the content 401. However, the user 101 can also view the detail in the main subject 403 because this is displayed by the display 111.

In the example of Fig. 4C the second part 409 of the content 401 that is displayed by the head mounted item 103 is displayed so that it appears to be positioned outside of the perimeter of the display 111. That is, in the example of Fig. 4C, there is no overlap of the first part 407 of the content 401 displayed by the display 111 and the second part 409 of the content 401 that is displayed by the head mounted item 103.

In other examples, at least some of, the second part 409 of the content 401 that is displayed by the head mounted item 103 can be displayed so that it appears to be overlapping with at least part of the display 111. This could create an overlap between at least some of the first part 407 of the content 401 displayed by the display 111 and at least some of the second part 409 of the content 401 that is displayed by the head mounted item 103. This overlap, or partial overlap, could be used to generate a perception of depth.

In the example of Fig. 4C the background 405 is displayed on the display 111. In some examples the background 405 could be displayed by the head mounted item 103. If the head mounted item 103 displays the background 405 then this can be displayed in a different plane to the main subject 403. In some examples the background 405 could be displayed in the same plane as other parts of the background such as 405-A and 405-B.

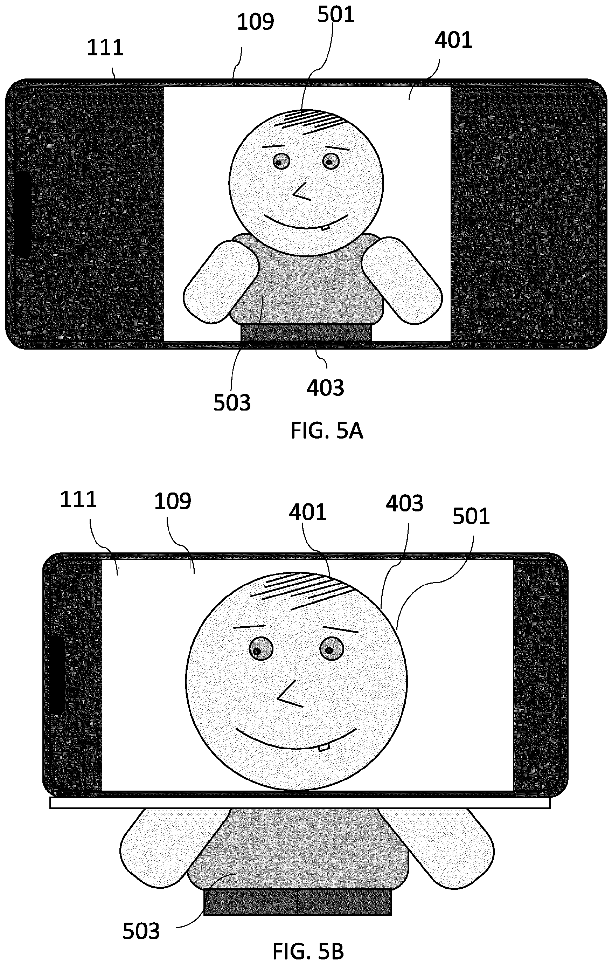

Figs. 5A to 5C show another example of content 401 that can be displayed by the device 109 and the head mounted item 103 respectively.

Fig. 5A shows content 401 being displayed on the display 111 of a device 109. The device 109 could be a handheld device 109 such as a smart phone or any other suitable type of device 109.

In this example the content 401 comprises an image. The image could be a photo or video or any other type of image. In this example the content 401 comprises a main subject 403. The main subject 403 can be displayed so that it is sharp and detailed.

The main subject 403 in this case is a person. The person comprises a head 501 and a body 503. In the example of Fig. 5A both the head 501 and the body 503 are displayed on the display 111.

In the examples of Figs. 5A to 5C the user 101 wishes to zoom in closer to the content 401 so that the main subject 403 is displayed larger on the display 111.

The user 101 can make any suitable control input to cause the zooming of the content 401 on the display 111.

Fig. 5B shows the content 401 displayed on the display 111 after it has been zoomed. The zooming has increased the scale of the content 401 on the display 111.

In Fig. 5B only part of the enlarged content 401 is displayed on the display 111. In this case the head 501 of the person is displayed on the display but the body 503 of the person is not. The body 503 is indicated in Fig. 5B but as this is outside of the perimeter of the display 111 it would not be displayed on the display 111.

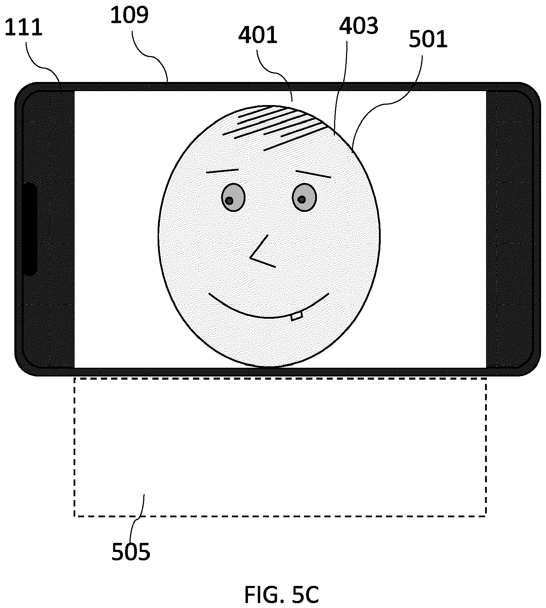

In the example of Fig. 5C a method, such as the method of Fig. 3 can be used to control the head mounted item 103 to display additional information to the user 101 when the content 401 has been zoomed so that only part of the content 401 is displayed on the display 111.

In the example of Fig. 5C the user 101 has zoomed the content 401 so that only the head 501 of the person is displayed on the display 111. This part of the content 401 therefore comprises device content because it is displayed on the display 111 of the device 109. The head mounted item 103, or any other suitable device can identify that only part of the content 401 is displayed on the display 111. For instance, the head mounted item 103, or an apparatus within the head mounted item 103, could use image recognition to identify that the content 401 has been zoomed and/or that only part of the content 401 is displayed on the display 111. In the example of Fig. 5C it could be determined that only the head 501 is displayed on the display 111.

The head mounted item 103, or an apparatus within the head mounted item 103, can then determine that there is additional content that is not currently displayed on the display 111. For instance, it can be determined that the body 503 of the person is not displayed, or that there are other parts of the content 401 that are not displayed.

The head mounted item 103 can then be controlled to display content 401 corresponding to the content 401 displayed on the display 111. In this example the corresponding content can provide additional content to the content 401 on the display 111 by providing an indication that there is a part of the content that is not currently displayed on the display.

In the example if Fig. 5C the indication comprises a blurred area 505. The burred area is aligned with the content 401 displayed on the display 111 because it is displayed so that it appears to extend out of an edge of the display 111. In this case the blurred area 505 can provide an indication that a part of the content 401 is not currently displayed on the display 111. The use of a blurred area 505 can provide information to the user 101 without drawing their attention away from the content 401 on the display 111. Other types of indications could be used in other examples.

The location at which the blurred area 505 is displayed can be used to provide an indication of the parts of the content 401 that are not displayed. In this example the blurred area 505 is displayed so that it appears at a lower edge of the display 111. This can indicate to the user 101 that the section of the content 401 that is not displayed is a part of the image beneath the currently displayed part.

In some examples the size of the blurred area 505 could provide an indication of the amount of content 401 that is not currently displayed on the display 111. For instance, the blurred area 505 could be used to give an indication of the size that the image would be if all of it was displayed on the display 111. In this case, if the user 101 has only zoomed in a small amount then only a small amount of the blurred area 505 would be shown. However, if the user 101 has zoomed in a lot a larger blurred area 505 would be shown.

The blurred area 505 can be generated by considering the full size of the image or other content 401 and overlaying a blurred version of the image or other content 401 around the display 111 so that the blurred area 505 extends for an area of the full size of the image. The area of the full size of the image will depend on the amount of zooming of the image and the distance between the user's head and the display 111. Other ways of generating the blurred area 505 could be used in other examples.

In the example of Fig. 5C only one blurred area 505 is shown. In some examples there could be more than one blurred area 505. For example, a blurred area 505 could be displayed at both a lower edge and an upper edge of the display 111. This could provide an indication the content 401 extends in more than one direction beyond the perimeter of the display 111.

In the example of Fig, 5C the blurred area 505 can comprise a blurred version of a part of the content 401 that is not displayed on the display 111. In other examples the blurred area 505 could be generated from a blurred version of the real world around the display 111 or a combination of the real world and the content 401.

The example of Figs. 5A to 5C therefore show how the corresponding content displayed by the head mounted item 103 can be used to provide information to the user 101 relating to the content 401 currently displayed on the display 111. In this case the size and location of the content 401 displayed by the head mounted item 103 gives an indication of the amount of zooming of the content 401 displayed on the display 111. Other types of information could be provided by the head mounted item 103 in other examples.

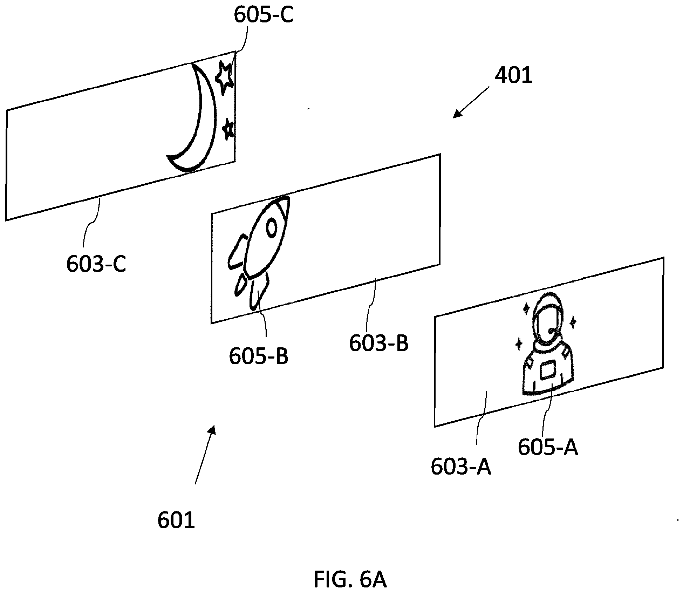

Figs. 6A to 6B show an example where the content 401 comprises an image 601 with multiple layers. The image 601 with multiple layers could comprise a High Efficiency Image File (HEIF) or any other suitable type of image.

The image 601 with multiple layers could comprise a focus stacked image. In the focus stacked image, each layer is of the same image but focused at a different distance so that objects at a given distance are blurred in one layer but sharp in another layer.

Fig. 6A shows an image 601 comprising multiple layers 603-A, 603-B, 603-C. In this example the image 601 comprises three layers 603-A, 603-B, 603-C. Other numbers of layers 603 could be used in other examples.

In this example the respective layers 603 comprise different objects 605. In this example the object 605-A in the first layer 603-A is an astronaut, the object 605-B in the second layer 603-B is a rocket and the object 605-C in the third layer 603-C is the moon and stars. Different types of objects 605 could be used in other examples.

The different layers 603 in the example of Fig. 6A have different depths. In this case the first layer 603-A is at the shallowest depth and the third layer 603-C is at the deepest depth. In this case the first layer 603-A comprising the astronaut can be positioned so that it appears close to a user 101, the second layer 603-B comprising the rocket can be positioned so that it appears in the middle distance and the third layer 603-C comprising the moon can be positioned so that it appears far away.

The different layers 603 of the of the image 601 with multiple layers can enable the image 601 to be separated into different segments. This can enable a first segment to be displayed by a display 111 of a device 109 and a second segment to be displayed by a head mounted item 103. In this case the different segments could comprise the different layers 603.

Other ways of separating content 401 into different segments can be used in other examples. Content does not need to be an image comprising multiple layers to be divided into segments. For instance, the segments could be different areas or objects of an image or other content.

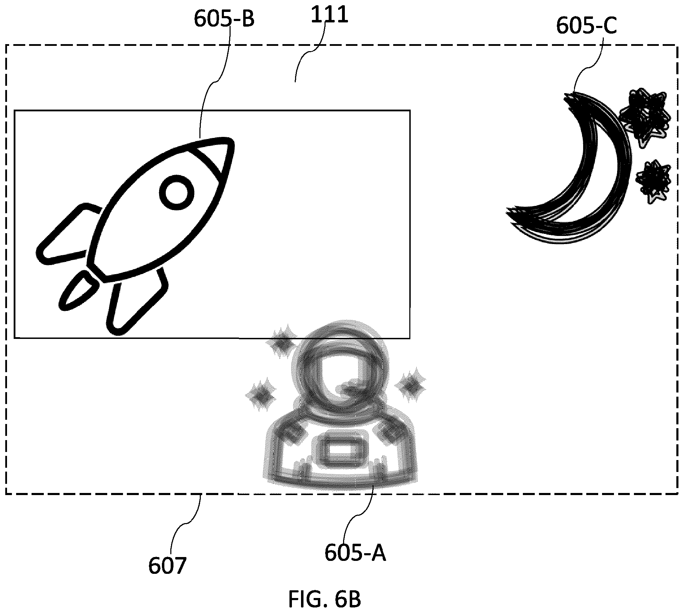

Fig. 6B shows how the display of the respective layers 603 of the image could be coordinated by the display 111 of the device 109 and the head mounted item 103.

The solid line in Fig. 6B indicates the edge of the display 111 of the device. The dashed line 607 in Fig. 6B indicates an extended image area that is provided by the head mounted item 103.

In this case the content 401 can be separated into different segments and a first segment can be displayed on the display 111 of the device 109 while the other segments can be displayed by the head mounted item 103. The segments displayed by the head mounted item 103 can be displayed at different depths to the segments displayed on the display 111 of the device 109. The first segment therefore provides device content and the other segments can provide additional content.

In this example the user has zoomed into the content 401 so that only one of the objects 605 is shown on the display 111 of the device 109. In this case the content 401 has been zoomed so that the rocket is displayed on the display 111. The rocket or the second layer 603-B of the image 601 provide the first segment that is displayed by the display 111.

The astronaut and the moon are not displayed on the display 111. These can be displayed by the head mounted item 103. The astronaut and the moon or the first layer 603-1 and the third layer 603-C of the image 601 provide the second segments that are displayed by the head mounted item 103.

In this case some of the segments of the content 401 displayed by the head mounted item 103 are aligned with the display 111 so that they appear to be positioned in an area outside of the display 111. In this case the moon is displayed so that it appears to be positioned in an area outside of the display 111.

In this case some of the segments of the content 401 displayed by the head mounted item 103 are aligned with the display 111 so that they appear to be positioned overlapping at least part of the display 111. In this case the astronaut is displayed so that it appears to be positioned partly in an area outside of the display 111 and partly overlapping with the area of the display 111.

The segments that are displayed by the head mounted item 103 can be aligned with the segments displayed by the display 111 so that they appear to be at different depths to the segment displayed on the display 111. For instance, the position of the display 111 relative to the head mounted item 103 can be determined and then the display of the respective segments by the head mounted item 103 can be controlled so that the first layer 603-A appears to be in the foreground while the third layer 603-C appears to be far away. The depths of the layers displayed by the head mounted item 103 will depend upon which segments are displayed by the display 111 and the relative depths of the objects within the images.

In some examples the different segments can be displayed with different image qualities. In the example of Fig. 6B the segment that is displayed on the display 111 is displayed with high resolution. This can enable the details of this segment to be viewed on the display. The segments that are displayed by the head mounted item 103 are displayed with a lower resolutions. In this example they are displayed slightly blurred. The blurring of the segments displayed by the head mounted item 103 can help to provide the perception of depth of the content 401.

Examples of the disclosure therefore enable the display of content to be coordinated between a head mounted item 103 and a device 109 comprising a display 111 so that content displayed by the head mounted item augments content displayed by the display 111.

Fig. 7 schematically illustrates an apparatus 701 that can be used to implement examples of the disclosure. In this example the apparatus 701 comprises a controller 703. The controller 703 can be a chip or a chip-set. The apparatus 701 can be provided within a device such as a head mounted item 103 or any other suitable device.

In the example of Fig. 7 the implementation of the controller 703 can be as controller circuitry. In some examples the controller 703 can be implemented in hardware alone, have certain aspects in software including firmware alone or can be a combination of hardware and software (including firmware).

As illustrated in Fig. 7 the controller 703 can be implemented using instructions that enable hardware functionality, for example, by using executable instructions of a computer program 709 in a general-purpose or special-purpose processor 705 that may be stored on a computer readable storage medium (disk, memory etc.) to be executed by such a processor 705.

The processor 705 is configured to read from and write to the memory 707. The processor 705 can also comprise an output interface via which data and/or commands are output by the processor 705 and an input interface via which data and/or commands are input to the processor 705.

The memory 707 stores a computer program 709 comprising computer program instructions (computer program code 711) that controls the operation of the controller 703 when loaded into the processor 705. The computer program instructions, of the computer program 709, provide the logic and routines that enables the controller 703. to perform the methods illustrated in the accompanying Figs. The processor 705 by reading the memory 707 is able to load and execute the computer program 709.

The apparatus 701 comprises:
at least one processor 705; and
at least one memory 707 storing instructions that, when executed by the at least one processor 705, cause the apparatus 701 at least to perform:
   identifying 301 device content being displayed on a display 111 of a device 109;
   determining 303 a position of a head mounted item 103 relative to the display 111 of the device 109; and
   controlling 305 the head mounted item 103 to display additional content corresponding to the device content displayed on the display 111 of the device 109 such that the additional content displayed by the head mounted item 103 provides additional content to the device content displayed on the display 111 of the device 109 and the additional content is aligned with the device content displayed on the display 111 of the device 109, wherein the alignment is based on the determined position of the head mounted item 103 relative to the display 111 of the device 109.

As illustrated in Fig. 7, the computer program 709 can arrive at the controller 703 via any suitable delivery mechanism 713. The delivery mechanism 713 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 709. The delivery mechanism can be a signal configured to reliably transfer the computer program 709. The controller 703 can propagate or transmit the computer program 709 as a computer data signal. In some examples the computer program 709 can be transmitted to the controller 703 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 709 comprises computer program instructions for causing an apparatus 701 to perform at least the following or for performing at least the following:
identifying 301 device content being displayed on a display 111 of a device 109;
determining 303 a position of a head mounted item 103 relative to the display 111 of the device 109; and
controlling 305 the head mounted item 103 to display additional content corresponding to the device content displayed on the display 111 of the device 109 such that the additional content displayed by the head mounted item 103 provides additional content to the device content displayed on the display 111 of the device 109 and the additional content is aligned with the device content displayed on the display 111 of the device 109, wherein the alignment is based on the determined position of the head mounted item 103 relative to the display 111 of the device 109.

The computer program instructions can be comprised in a computer program 709, a non-transitory computer readable medium, a computer program product, a machine readable medium. In some but not necessarily all examples, the computer program instructions can be distributed over more than one computer program 709.

Although the memory 707 is illustrated as a single component/circuitry it can be implemented as one or more separate components/circuitry some or all of which can be integrated/removable and/or can provide permanent/semi-permanent/ dynamic/cached storage.

Although the processor 705 is illustrated as a single component/circuitry it can be implemented as one or more separate components/circuitry some or all of which can be integrated/removable. The processor 705 can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 3 can represent steps in a method and/or sections of code in the computer program 709. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device, wherein the alignment is based on the determined position of the head mounted item relative to the display of the device.

2. An apparatus as claimed in claim 1 wherein the additional content displayed by the head mounted item provides additional content to the device content displayed on the display of the device by at least one of:
displaying part of the device content that is not displayed on the display of the device;
extending the device content that is displayed on the display of the device; or
creating a perception of depth in an image displayed on the display of the device.

3. An apparatus as claimed in any preceding claim wherein the means are also for controlling a depth of rendering of additional content displayed by the head mounted item based, at least in part on, the device content displayed on the display of the device and the position of the head mounted item relative to the display.

4. An apparatus as claimed in any preceding claim wherein the means are also for controlling the additional content displayed by the head mounted item so that it appears to have a lower resolution compared to the device content displayed on the display of the device.

5. An apparatus as claimed in any preceding claim wherein the means are also for controlling the additional content displayed by the head mounted item so that it appears to be displayed outside an area of the display of the device.

6. An apparatus as claimed in claim 5 where the additional content that is displayed so that it appears to be outside the area of the display of the device comprises at least one of:
an indication of device content not displayed on the display of the device;
an indication of a size of an image wherein at least part of the image is displayed on the display of the device; or
one or more parts of an image wherein a first part of an image is displayed on the display of the device.

7. An apparatus as claimed in any of claims 1 to 4 wherein the means are also for controlling the additional content displayed by the head mounted item so that it appears to be displayed at least partly overlapping an area of the display of the device.

8. An apparatus as claimed in any preceding claim wherein the means are for separating content into two or more segments wherein at least a first segment comprises device content displayed on the display of the device and at least a second segment comprises additional content displayed by the head mounted item.

9. An apparatus as claimed in claim 8 wherein the second segment is displayed at a lower resolution to the first segment.

10. An apparatus as claimed in any preceding claim wherein the device content displayed on the display of the device is identified using image recognition of the device content.

11. An apparatus as claimed in any preceding claim wherein the head mounted item comprises at least one of;
an augmented reality headset; or
smart glasses.

12. A method comprising:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device wherein the alignment is based on the determined position of the head mounted item relative to the display of the device.

13. A method as claimed in claim 12 wherein the additional content displayed by the head mounted item provides additional content to the device content displayed on the display of the device by at least one of:
displaying part of the device content that is not displayed on the display of the device;
extending the device content that is displayed on the display of the device;
creating a perception of depth in an image displayed on the display of the device.

14. A computer program comprising program instruction which, when executed by an apparatus, cause the apparatus to perform:
identifying device content being displayed on a display of a device;
determining a position of a head mounted item relative to the display of the device; and
controlling the head mounted item to display additional content corresponding to the device content displayed on the display of the device such that the additional content displayed by the head mounted item provides additional content to the device content displayed on the display of the device and the additional content is aligned with the device content displayed on the display of the device wherein the alignment is based on the determined position of the head mounted item relative to the display of the device.

15. A computer program as claimed in claim 14 wherein the additional content displayed by the head mounted item provides additional content to the device content displayed on the display of the device by at least one of:
displaying part of the device content that is not displayed on the display of the device;
extending the device content that is displayed on the display of the device;
creating a perception of depth in an image displayed on the display of the device.
